# EUROPEAN PATENT SPECIFICATION

(11) **EP 1 272 771 B1**
(45) Date of publication and mention of the grant of the patent: **13.10.2004**
(21) Application number: 01919652.6
(22) Date of filing: 11.04.2001
(51) Int. Cl.: F16B 13/08

(54) **SECUREMENT MEMBER**
BEFESTIGUNGSVORRICHTUNG
ELEMENT DE FIXATION

(30) Priority: 13.04.2000 GB 0008971
(43) Date of publication of application: 08.01.2003
(73) Proprietor: Herbison, Francis Dennis, Hull HU4 6RR (GB)
(72) Inventor: Herbison, Francis Dennis, Hull HU4 6RR (GB)
(74) Representative: Chugg, David John
(86) International application number: PCT/GB2001/001623
(87) International publication number: WO 2001/079713

(56) References cited:
- EP-A- 0 331 816
- DE-A- 1 575 353
- FR-A- 674 461
- FR-A- 956 348

## Description

### Field of the Invention

The present invention relates to a securement member, an assembly comprising a securement member and an article, and a method of securing an article to a surface.

### Background to the Invention

Architectural articles are generally secured in place using a fixing material, for example mortar. However, until the mortar is set, such articles are at risk from being moved out of position or of being removed. Even when the mortar has set, the articles can still be relatively easily removed by causing damage to the mortar either accidentally or intentionally, for example, by vandals. Such architectural articles may include coping and capping stones, architectural features, cosmetic, structural, ornamental and artistic features. These features may be relatively expensive and may be positioned outside where they are particularly prone to vandals and potential thieves.

EP 0 331 816, FR 674 461 and DE 1575 353 disclose securement members comprising an anchor member and an actuating member, the anchor member comprising a first arm and a second arm, the actuating member is arranged to locate between the first arm and the second arm and to be movable between at least a first position and a second position in which the first arm and the second arm are spaced further apart when the actuating member is in the second position relative to the first position.

FR 956 348 discloses a securement member comprising an anchor member and an actuating member, the anchor member comprising a first arm and a second arm, the actuating member is arranged to locate between the first arm and the second arm and the be movable between at least a first position and a second position.

It is an aim of the present invention to overcome at least one problem associated with the prior art whether referred to herein or otherwise.

### Summary of the Invention

According to a first aspect of the present invention there is provided a securement member comprising an anchor member and an actuating member, the anchor member comprising a first arm and a second arm, the actuating member is arranged to locate between the first arm and the second arm and to be movable relative to the anchor member between at least a first position and a second position in which the first arm and the second arm are spaced further apart when the actuating member is in the second position relative to the first position in which, in the second position, the first arm, second arm and actuating member are arranged to be located at least partially in a recess characterised in that the anchor member comprises an anchor plate and said recess tapers outwardly from a mouth region to a retaining region and said outwardly tapering recess is formed prior to insertion of the securement member.

Preferably, the actuating member is slidably movable relative to the anchor member between the first position and the second position.

Preferably the actuating member comprises a body that tapers downwardly from an upper surface to a lower surface.

Preferably, the actuating member comprises a first surface and a second surface which are arranged, in use, to co-operate with an inner surface of the first arm and an inner surface of the second arm respectively.

Preferably the first surface and the second surface have raised portions provided thereon. Preferably the first surface and the second surface have serrations defined thereon.

The inner surfaces of the first arm and the second arm may have raised portions defined thereon. The inner surfaces of the first arm and the second arm may have serrations defined thereon.

Preferably the serrations on the actuating member are inverted relative to the serrations on the inner surfaces of the first arm and the second arm.

The securement member may comprise retaining means to retain the actuating member to the anchor member prior to use. The retaining means may comprise a retaining groove provided by the first arm and second arm. The retaining means may comprise retaining raised portions provided on the actuating member. Preferably the retaining raised portions are arranged to be removably retained in the retaining grooves prior to use.

The first arm and the second arm may be urged towards one another in the second position.

The first arm and the second arm may comprise a resilient material.

Preferably the actuating member comprises a plastics material and may comprise a resilient material.

Preferably the anchor member comprises a plastics material and may comprise a resilient material.

Preferably the actuating member comprises an upper abutment surface. Preferably the actuating member is arranged, in use, to move from the first position to the second position as a result of the upper abutment surface abutting a further surface.

Preferably the anchor member comprises an anchor plate. Preferably the anchor plate is arranged, in use, to locate at least partially underneath a building member. The anchor plate may have apertures defined therein. The anchor plate may be corrugated.

The anchor member may comprise an elongate portion. The elongate portion may be arranged, in use, to extend through a passageway defined in a building member. The elongate portion may be arranged, in use, to extend between opposing surfaces of two adjacent building members.

The anchor member may comprise a first upper part and a second lower part. The second lower part may comprise a plug. The first upper part may provide a threaded shaft for insertion into the plug.

The actuating member may comprise side plates to prevent the actuating member from being transversely removed from the first and second arms. The side plates may prevent the actuating member sliding transversely relative to the first and second arms.

Preferably, in the second position, the first arm, second arm and actuating member are located at least partially located in a recess. Preferably in the second position the first arm, second arm and actuating member form a contiguous cross-section.

Preferably, in the second position, the first arm, second arm and actuating member cannot be removed from the recess.

Preferably in the first position at least a part of the first arm, second arm and actuating member can be inserted into a recess.

Preferably the recess has a frusto-conical cross-section. Preferably the cavity is tapered outwardly from a mouth region to a retaining region.

According to a second aspect of the present invention there is provided an assembly comprising a securement member and an article having a recess defined therein, the securement member comprising an anchor member and an actuating member, the anchor member comprising a first arm and a second arm, the actuating member is arranged to locate between the first arm and the second arm, the actuating member is movable relative to the anchor member between a first position and a second position wherein the first arm and the second arm are spaced further apart when the actuating member is in the second position relative to the first position, in which, the second position, the first arm, second arm and actuating member are arranged to be located at least partially in the recess characterised in that the anchor member comprises an anchor plate and said recess is tapered outwardly from a mouth region to a retaining region and wherein the outwardly tapering recess is formed in the article prior to insertion of the securement member.

Preferably the recess is formed in the article using an extrusion method.

Preferably, the securement member is in accordance with the first aspect of the present invention.

Preferably the article has a cavity or recess defined therein. The cavity may be an elongate cavity extending longitudinally along the article and may extend for the full longitudinal length of the article. The cavity may be a discrete cavity which does not extend longitudinally.

Preferably the cavity has a frusto-conical cross-section. Preferably the cavity is tapered outwardly from a mouth region to a retaining region.

Preferably the cavity has an abutment surface provided therein. Preferably the abutment surface is arranged to abut an upper surface of the actuating member in order to move the actuating member relative to the anchor member between the first position and the second position.

Preferably, at least a part of the actuating member and at least a part of the first arm and the second arm can be inserted through the mouth of the cavity and into a retaining region whilst the actuating member is in the first position. Preferably, at least a part of the actuating member and at least a part of the first arm and the second arm are retained in the retaining region whilst the actuating member is in the second position and cannot pass through a mouth region of the cavity.

According to a third aspect of the present invention there is provided a method of securing an article to a surface comprising securing an anchor member of a securement member to the surface and engaging at least a part of the securement member with the article, the method further comprising locating an actuating member between a first arm and a second arm of the anchor member, and moving the actuating member between a first position and a second position relative to the anchor member whereby the first arm and the second arm are spaced further apart when the actuating member is in the second position relative to the first position the method further comprising providing a recess for at least partially locating the first arm, second arm and actuating member therein, characterised in that the anchor member comprising an anchor plate and the recess tapers outwardly from a mouth region to a retaining region and wherein the outwardly tapering recess is formed prior to insertion of the securement member.

Preferably the method comprises initially retaining the actuating member to the anchor member.

Preferably the method comprises inserting at least a part of the first arm, second arm and actuating member into a recess defined in the article.

Preferably the method comprises inserting at least a part of the first arm, second arm and actuating member through a mouth region of the recess and into a retaining region of the recess whilst the actuating member is in the first position.

Preferably the method comprises retaining at least a part of the first arm, second arm and actuating member in a retaining region of the recess whilst the actuating member is in the second position.

Preferably the method comprising lowering the article in order to locate at least a part of the first arm, second arm and actuating member in a recess defined in the article.

### Brief Description of the Drawings

The present invention will now be described, by way of example only, and with reference to the drawings, that follow, in which:
Figure 1 is a cross-section of a first embodiment of the present invention prior to securing a coping stone on to the top of a wall.
Figure 2 is a cross-section of a first embodiment of the present invention securing a coping stone on to the top of a wall.
Figure 3 is a cross-section of a part of a first embodiment of the present invention prior to securing a coping stone on to the top of the wall.
Figure 4 is a cross-section of a part of a first embodiment of the present invention securing a coping stone on to the top of a wall.
Figure 5a is a cross-section of a part of a further embodiment of the present invention.
Figure 5b is a cross-section of a part of a further embodiment of the present invention in an initial position.
Figure 6 is a cross-section of another embodiment of the present invention securing a coping stone on to the top of a wall.
Figure 7a is a perspective view of a still further embodiment of the present invention prior to use.
Figure 7b is a cross-section of a still further embodiment of the present invention prior to use.
Figure 8 is an embodiment of the present invention securing a coping stone on to the top of a wall.
Figure 9 shows various views of an embodiment of the present invention.
Figure 10 is a cross-section of a yet further embodiment of the present invention.
Figure 11 is a plan view of an embodiment of a discrete cavity.
Figure 12 is a perspective view of an embodiment of a discrete cavity.
Figure 13a, 13b and 13c are cross-sections of a discrete cavity being fixed to a surface.
Figure 14a, 14b and 14c are cross-sections of various embodiments of coping stones.
Figures 15 to 21 are perspective views of articles which are arranged to be secured to a surface by embodiments of the present invention.

### Description of the Preferred Embodiments

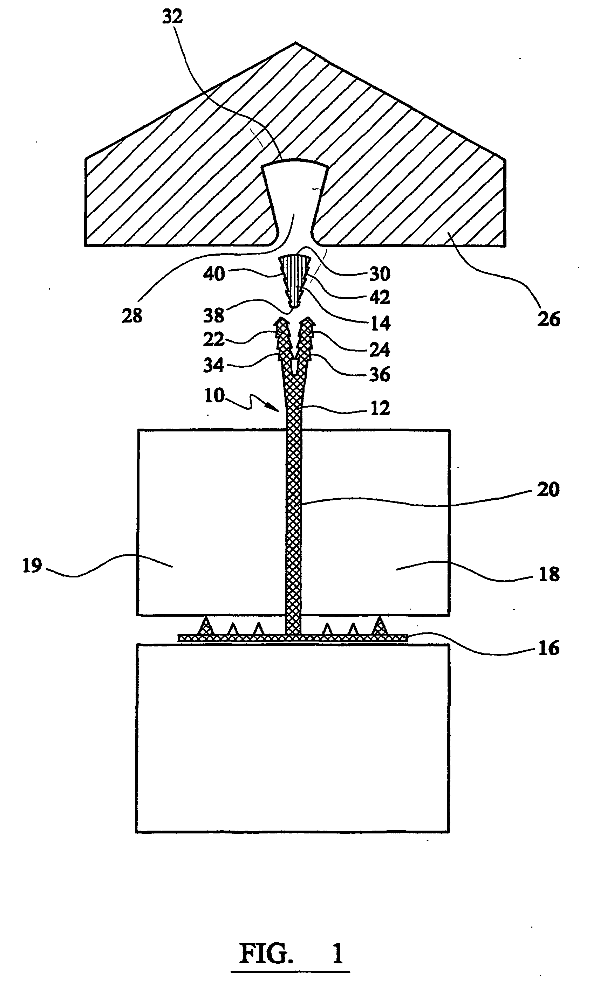

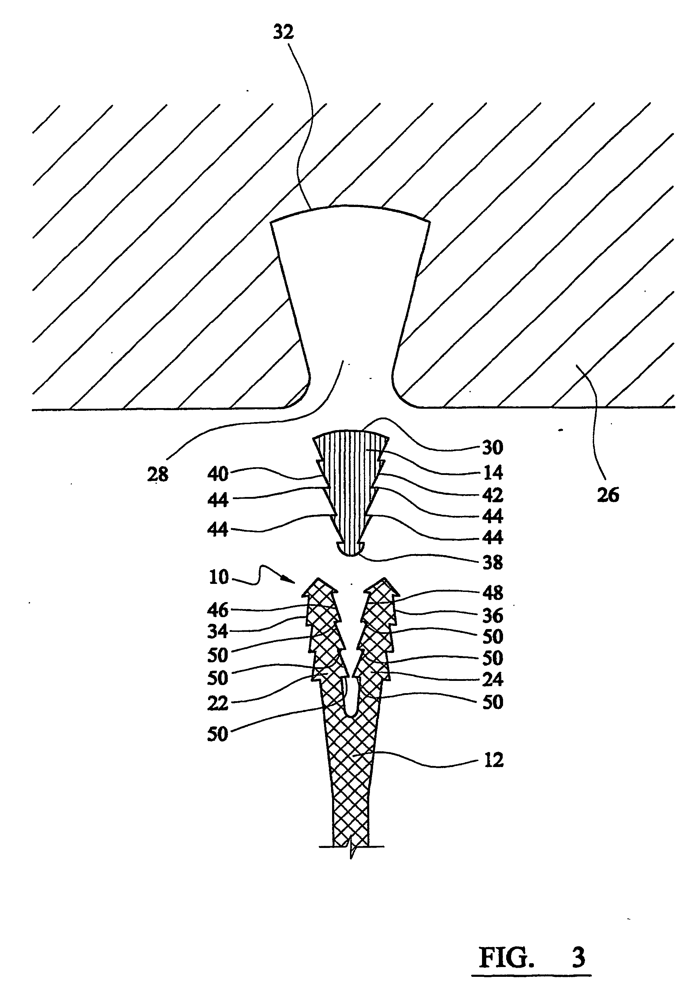

As shown in Figure 1 and Figure 3, the securement member 10 comprise an anchor member 12 and an actuating member in the form of a spreader member 14. The anchor member 12 has an anchor plate 16 which is arranged, in use, to locate underneath at least a part of one building member, for example a brick 18. The anchor member 12 has an elongate portion 20 extending from the base towards a spreader receiving portion. The elongate portion 20 may extend upwardly between two adjacent bricks 18, 19 which form a double brick thick wall. Alternatively, the elongate portion 20 may extend through a passageway defined in a brick.

The spreader receiving portion comprise a first arm 22 and a second arm 24 defining an opening therebetween. The spreader member 14 is arranged, in use, to be received in the opening and as the spreader member is forced further into the opening, the first and second arms 22, 24 are forced further apart and thereby increase the external width between the outer surfaces 34, 36 of the first and second arms 22, 24.

Initially, in use, the lower extent of the spreader member 14 is retained between the upper extent of the first arm 22 and the second arm 24. At this position the distance between the external surfaces of the first and second arms 22, 24 is not appreciably increased. A coping stone 26, or other article may be provided with an inverted frusto-conical recess 28 which may be an elongate recess defined along the length of the coping stone 26. In the initial position, the spreader member 14 and the first and a second arms 22, 24 can be inserted through a mouth of the recess 28 in order to locate in a retaining region of the recess 28.

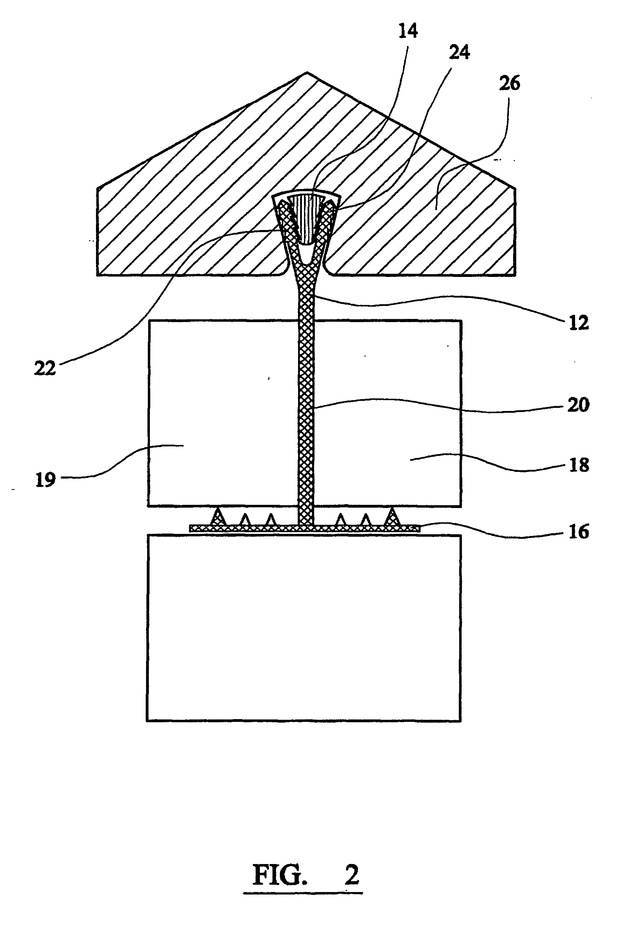

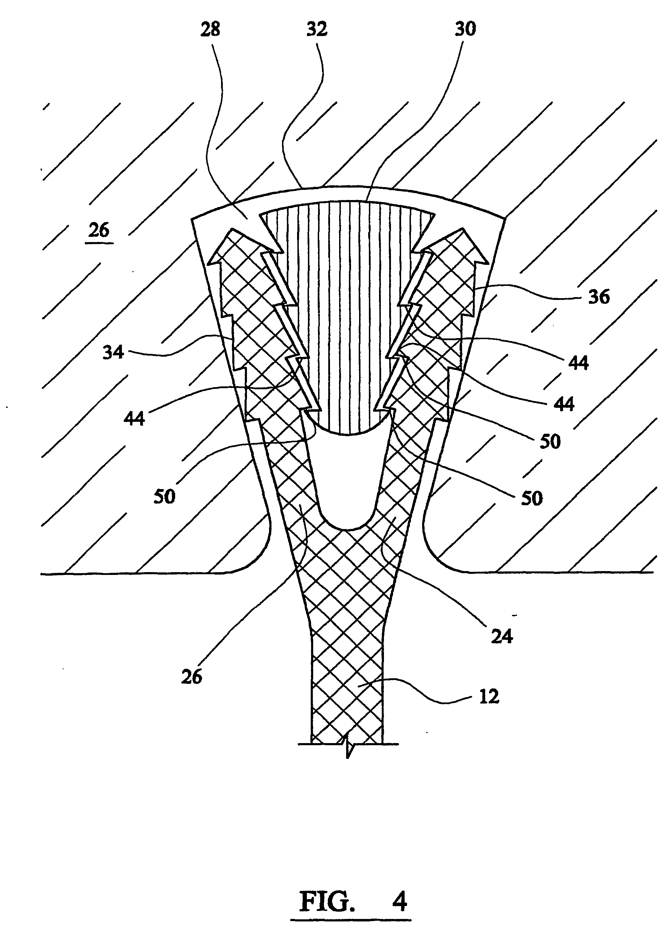

As the coping stone 26 is lowered the spreader member 14 and the first and second arms 22, 24 are received in the recess 28. As the coping stone 26 is lowered further, the upper face 30 of the spreader member 14 abuts the upper face 32 of the recess 28 and a force is applied to the spreader member 14 which slidably moves into the opening between the first and second arms 22, 24 and thereby forces the arms 22, 24 apart and increases the distance between the external surfaces 34, 36 of the arms 22, 24 respectively. The coping stone 26 is pushed further downwards in order to push the spreader member further 14 downwards to thereby increase the width between the external surfaces 34, 36 of the arms 22, 24 in order for the arms 22, 24 and spreader member 14 to form a contiguous cross-section across substantially the full width of the recess 28, as shown in Figure 2 and Figure 4. In this position it can be seen that the coping stone 26 could not be simply removed from the wall as a result of the engagement with the securement member 10.

The spreader member 14 is tapered from an upper face 30 to a lower face 38. Accordingly, the spreader member 14 is substantially wedge shaped. The spreader member 14 has raised portions extending laterally along the outer surfaces of the two lateral faces 40, 42 to the spreader member. The outer surfaces 40, 42 of the spreader member 14 is provided with a number of serrations 44 extending laterally along the outer surfaces 40, 42 thereof. Similarly, the inner surfaces 46, 48 of the arms 22, 24 may have corresponding raised portions or serrations 50 defined thereon. The raised portions 50 are arranged, in use, to co-operate within the raised portion or serrations 44 on the spreader member 14 in order to prevent the spreader member 14 from being slidably moved upwards relative to the arms 22, 24 when the arms are not additionally moved apart. The arms 22, 24 are urged towards each other as a result of a bias. This may be caused by the arms 22, 24 and the anchor member comprising a resilient material.

The first and second arms 22, 24 are urged towards each other and trap the spreader member 14 in the opening defined between the first and second arms 22, 24. Since the first and second arms 22, 24 are urged towards each other the only way the spreader member 14 can be removed from the opening is to manually move the arms 22, 24 away from each other such that the respective raised portion or serrations 44, 56 no longer co-operate and enable the spreader member 14 to be -removed. Accordingly, when the spreader member 14 and arms.22, 24 are engaged in a recess 28 defined in a coping stone 26, the arms 22, 24 cannot be moved apart and, hence, the coping stone 26 cannot be removed from the securement member 10, since the contiguous width of the arms 22, 24 and the spreader member is greater than the width of the mouth of the recess 28.

In use, the securement member 10 is secured in place by mortar. The wall and coping stone 26 are adhered as usual using mortar with the securement member providing additional securement.

Since the recess 28 is elongate along the coping stone 26 the coping stone may be slidably moved relative to the securement member in order to be able to be correctly aligned next to longitudinally adjacent coping stones 26.

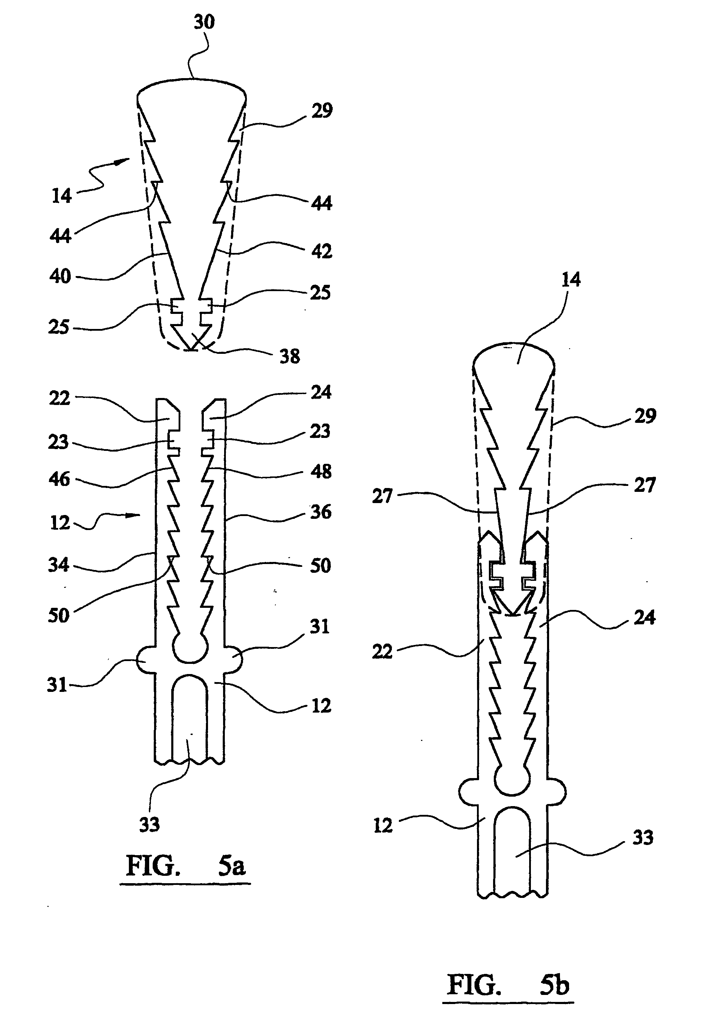

A further embodiment of the present invention, includes retaining means to initially retain the spreader member 14 in an initial position in the arms 22, 24 of the anchor member prior to use, as shown in Figure 5a and 5b. The retaining means comprises a retaining groove 23 defined on the inner surfaces of each arm 22, 24 at an upper region thereof. The spreader member 14 has retaining raised portions 25 provided on a lower portion of both lateral outer faces of the spreader member 14. The retaining raised portions 25 are arranged to engage in the retaining grooves 23 of the arms in order to retain the spreader member 14 to the anchor member 12 without substantially spacing the arms 22, 24 from each other. When force is applied to the upper surface of the spreader member tapered surfaces 27 of the spreader member 14 may force the arms 22, 24 apart and thereby enable the. retaining raised portions 25 to disengage from the retaining grooves 23.

The spreader member has side plates 29 provided at each side. The side plates are perpendicular to the lateral faces and are spaced apart by a distance slightly greater than the lateral width of the arms 22, 24. When the spreader member 14 is engaged in the arms 22, 24 the side plates 29 prevent the spreader member 14 from sliding laterally relative to the arms and thus prevent the spreader member 14 from possibly becoming removed from the opening between the arms 22, 24 by being displaced laterally.

The anchor member 12 is provided with spacer portions 31 on each lateral external surface. The spacer portions 31 indicate to the user the correct level of the brick below the spacer portion 31. The spacer portion 31 should just abut the upper surface of the brick below the spacer portions 31 and, therefore, the correct level of mortar below the brick. If the spacer portion 31 does not abut the upper surface of the brick then further mortar needs to be applied under the brick in order to raise it.

The anchor member 12 and the spreader member 14 may comprise a plastic material and preferably comprise a resilient material.

The elongate portion 20 of the anchor member 12 may have elongate grooves 33 defined therein. This decreases the amount of material required for the anchor member 12 and also enable mortar to locate in the grooves 33 in order to increase the adherence between the mortar and the anchor member 12.

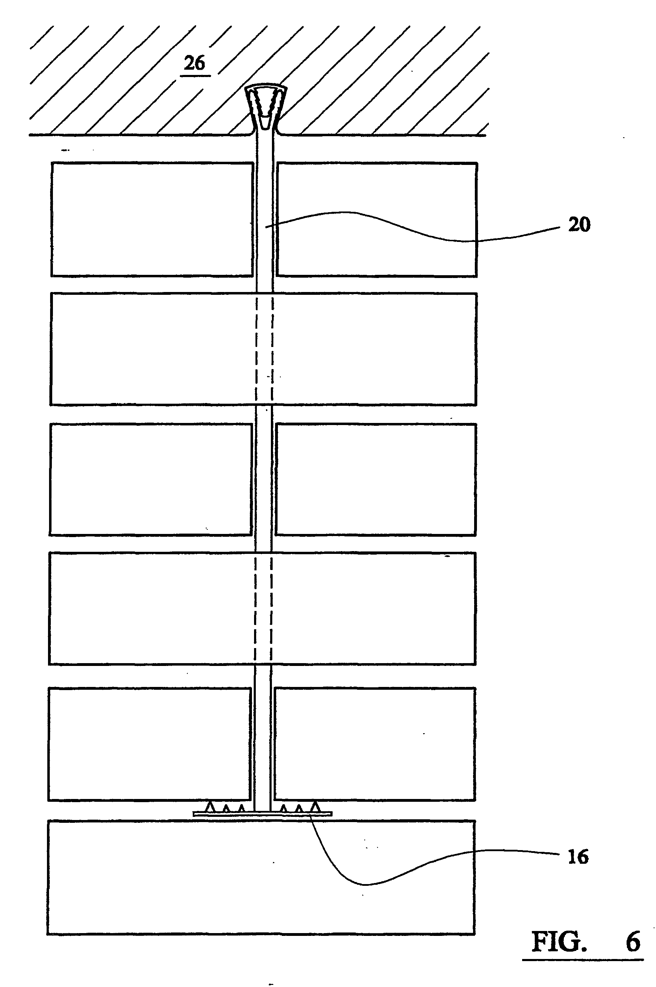

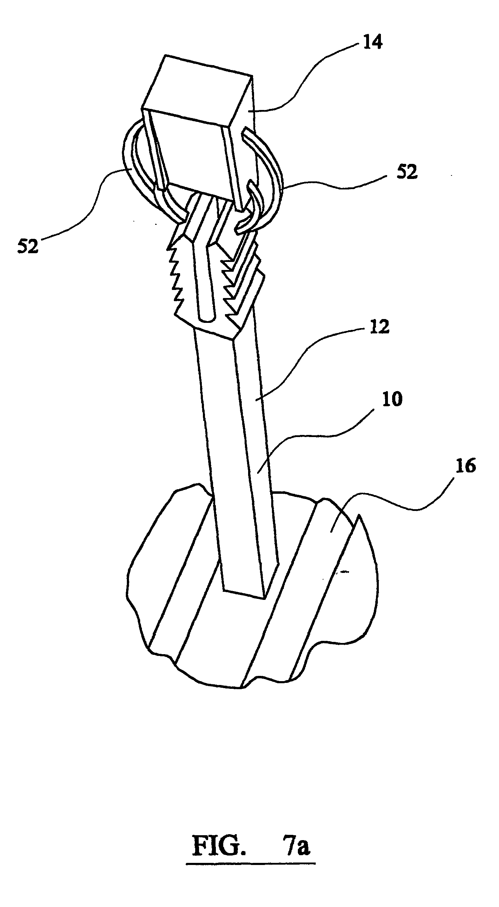

As shown in Figure 6, the anchor plate 16 of the securement member 10 may be located below a number of layers of bricks. This embodiment of the present invention has an extended elongate portion 20 which extends between adjacent bricks and/or may extend through passageways provided in the bricks. Such a securement member 10 may be more secure and prevent vandals or thieves from attempting to shear the mortar located between the first layer of bricks in order to remove the coping or capping stones 26. This embodiment may prevent removal of the article by a determined vandal or thief and would be especially suited for use in a new or remedial building in a high rise building or flats, car parks and institutional building, for example prisons, to ensure greater safety to the public and law enforcement officers.

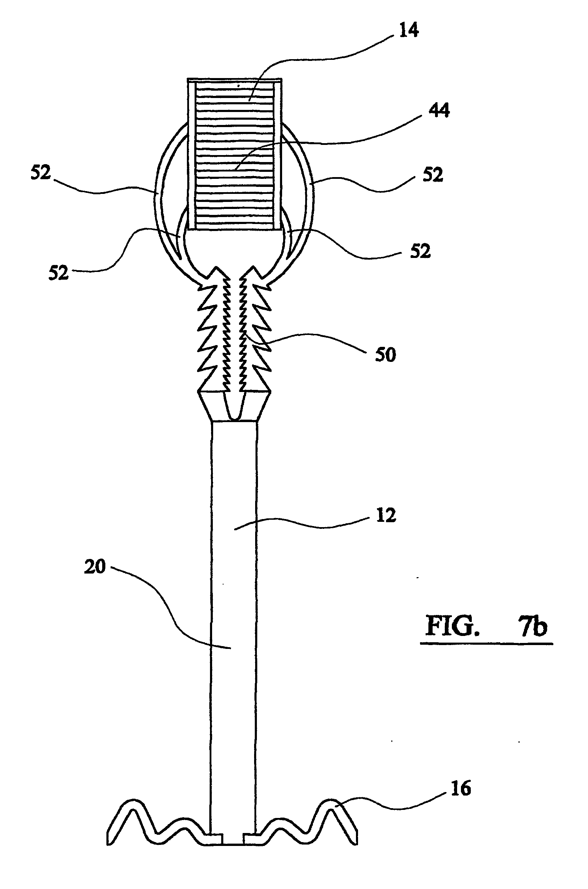

The securement member 10 is preferably made from an injection moulding method. The spreader member 14 and the anchor member 12 may be made as a single injection moulding, as shown in Figure 7a and 7b. In order to make both the separator member 14 and the anchor member 12 from a single injection moulding a passageway for the material is required between the cavity for the separator member 14 and the anchor member 12. The method results in runners 52 which connect the spreader member 14 to the anchor member 12. Preferably, the spreader member 14 is formed perpendicularly relative to the anchor member 16. The runners 52 ensure that the spreader member 14 and the anchor member 12 are not inadvertently separated. This could result in one or both members being lost prior to use. In use, the spreader member 14 can be easily separated from the anchor member 12 by twisting the relevant member relative to the runner 52 in order to remove and discard the runners 52.

The anchor plate 16 may be corrugated, as shown in Figures 7a and 7b. The corrugated anchor plate would ensure that at least some mortar would be located above and below the anchor plate 16 in order to increase the adherence between the anchor plate and the mortar.

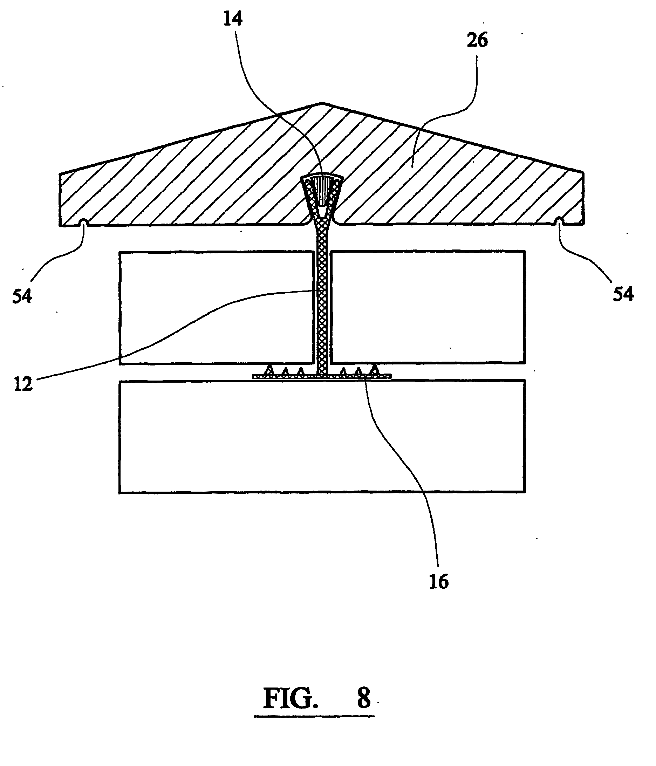

As shown in Figure 8, the coping stone 26 may be provided with grooves 54 to prevent water from running along the underside of the coping stones 26 and flowing down the wall. The grooves 54 encourage the water to drip downwards rather than flowing along the underside of the coping stones 26.

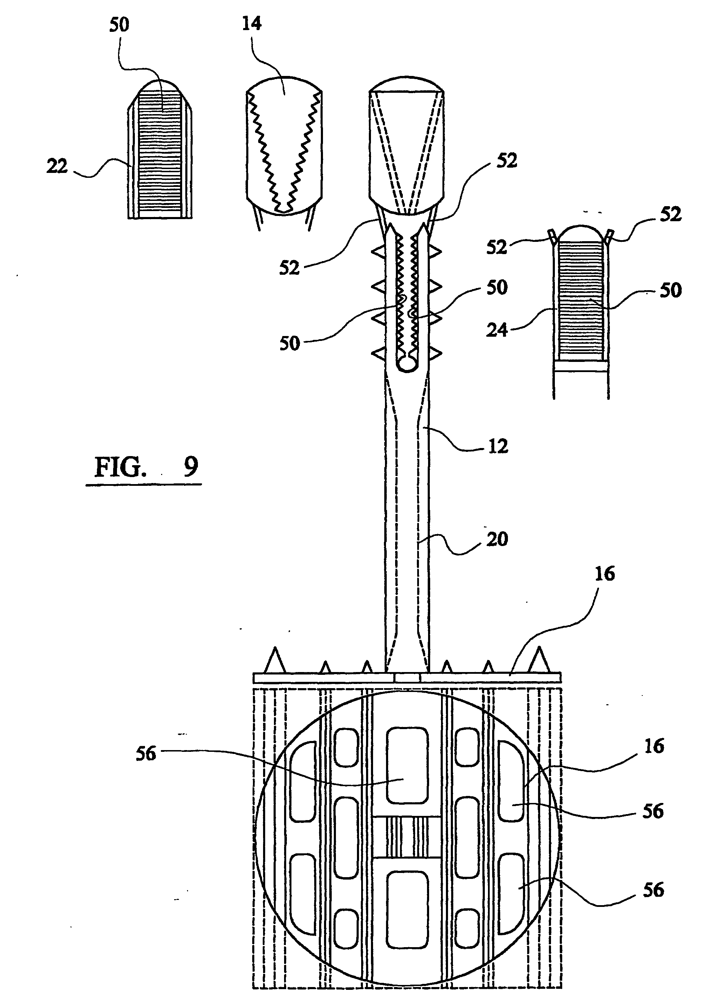

An embodiment of the present invention is shown in Figure 9. The anchor plate 16 may have a plurality of apertures 56 defined therein. Such apertures 56 reduce the amount of material required to make the securement member 10 and hence reduce the cost. In addition, the apertures 56 may increase the adherence between the anchor plate 16 and the mortar.

In a yet further embodiment of the present invention the anchor member 12 comprises a first upper part 58 and a lower second part 60. The lower end of the upper part 58 comprises a threaded shaft 62. The lower second part 66 comprises a tubular plug. The tubular plug is arranged to be located in a cylindrical opening, for example in masonry, which may be formed by a drill. Once the plug is located in the cylindrical opening, the upper part 58 is screwed into the plug and deflects the retaining members 64 of the plug in order for the anchor member 16 to be securely fixed in the material. The upper part 58 of the anchor member 12 may be provided with a flange 66 in order to inform the user. that the upper part 58 has been secured in the plug to the correct depth. The securement member 10 can then be used to be secured to an article as previously described.

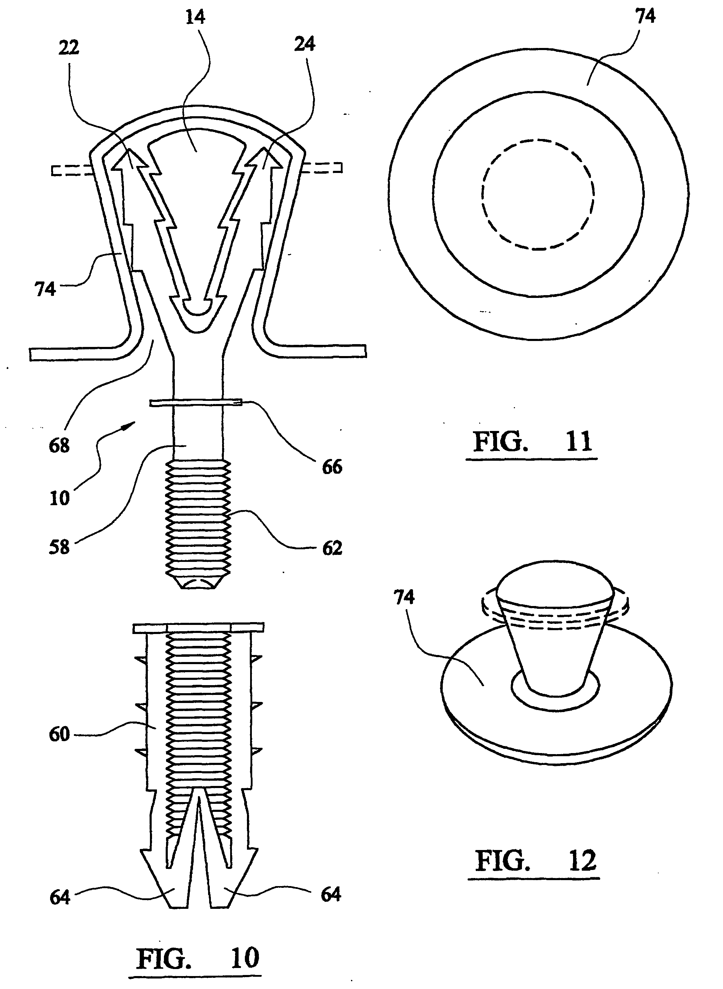

The securement recess 28 may be provided by a discrete cavity 68 as shown in Figure 10, Figure 11 and Figure 12 rather than an elongate cavity. The discrete cavity 68 may provide a circular receiving opening and a circular cavity having a frusto-conical cross-section. The discrete cavity is preferably made from a single sheet of material.

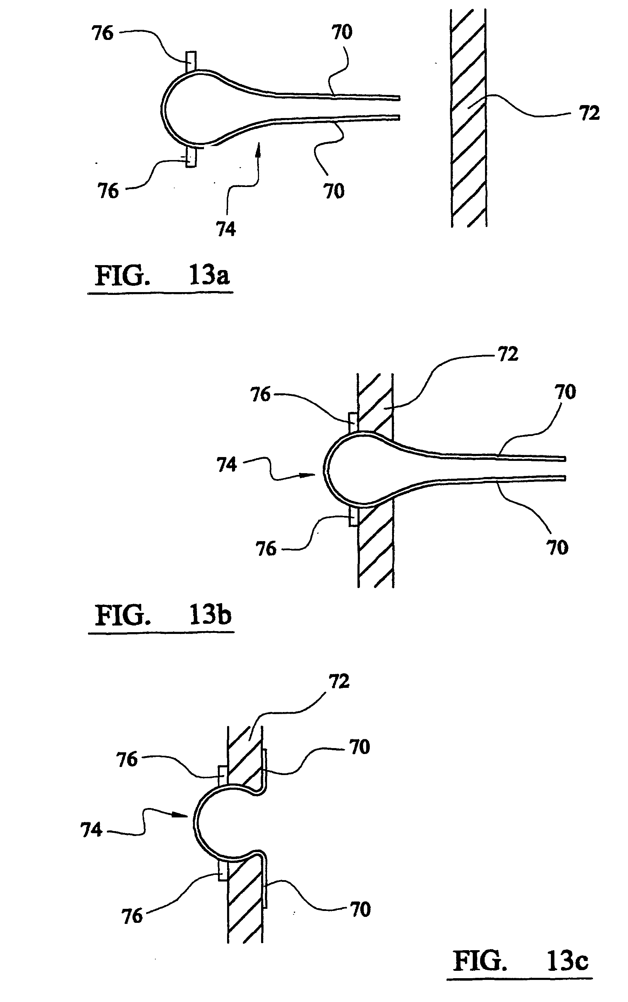

The discrete cavity may be formed by pushing free ends 70 of a discrete opening member through the fixing surface 72 or through an aperture provide in the fixing surface, as shown in Figure 13a - 13c. The discrete opening member 74 is pushed through the surface 72 until an abutment flange 76 abuts and locates adjacent to the rear surface of the fixing surface 72. The free ends 70 of the discrete opening member 74 are then folded backwards in order to lie adjacent to the front surface of the fixing surface 72.

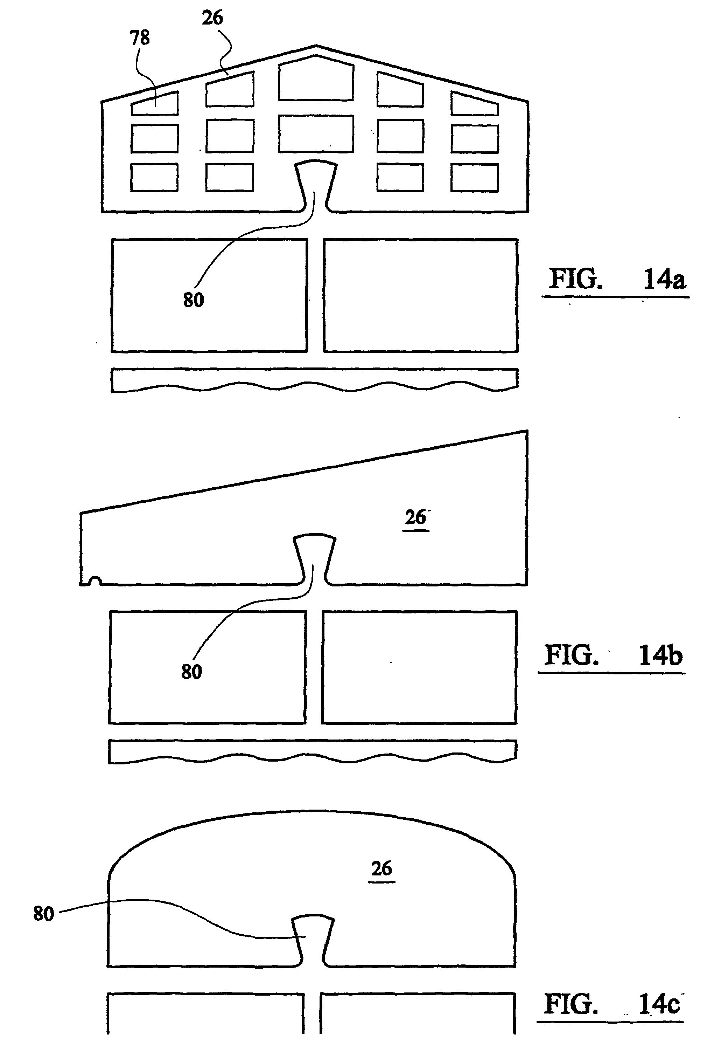

As shown in Figure 14a - 14c, coping stones 26 having different profiles could be easily secured by the present invention. Coping stones may be formed by an extrusion method and may have elongate cavities 78 defined through the longitudinal length thereof, as shown in Figure 14a. Accordingly, an elongate recess 80 having a frusto-conical profile could easily be incorporated in the coping stones 26 using such an extrusion method.

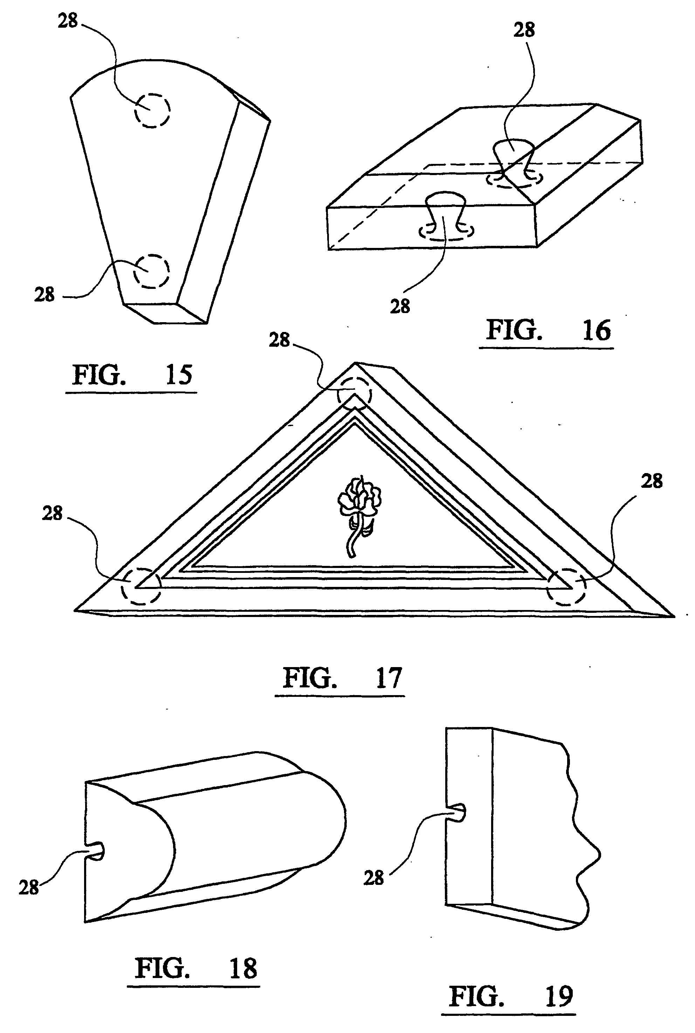

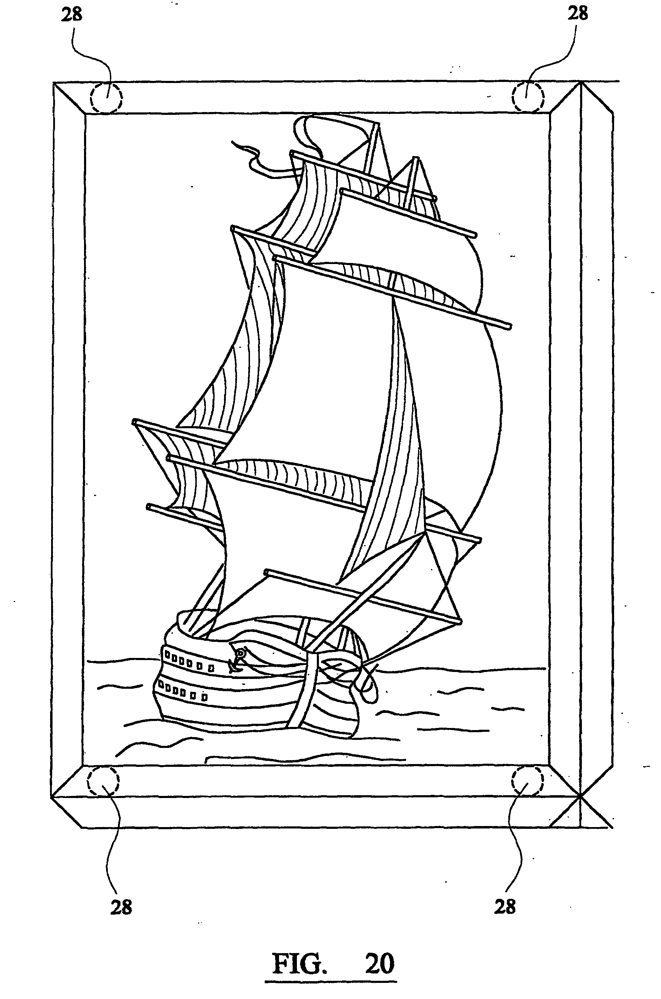

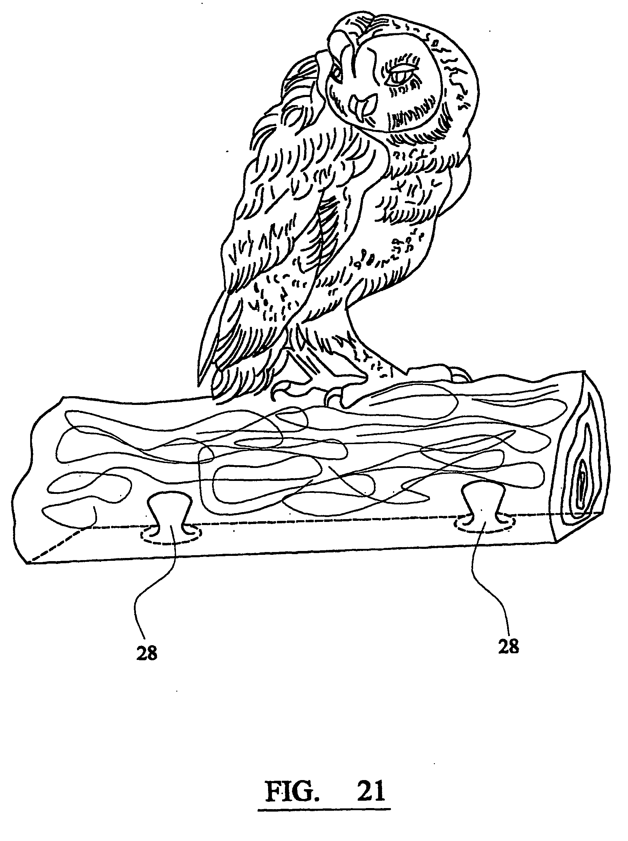

Figure 15 to Figure 21 shown examples of articles which provide suitable recesses 28 in order to secure the article to a surface. The recesses 28 of the articles are aligned with the anchor member 16 whilst the spreader member 14 is in an initial retained position, as shown in Figure 5b. The article is then pushed towards the surface in order for the securement, members 10 to lock the article to the surface.

## Claims

1. A securement member (10) inserted in a tapered recess comprising an anchor member (12) and an actuating member (14), the anchor member (12) comprising a first arm (22) and a second arm (24), the actuating member (14) is arranged to locate between the first arm (22) and the second arm (24) and to be movable relative to the anchor member (12) between at least a first position and a second position in which the first arm (22) and the second arm (24) are spaced further apart when the actuating member (14) is in the second position relative to the first position, in which in the second position, the first arm (22), second arm (24) and actuating member (14) are arranged to be located at least partially in a recess (28) **characterised in that** the anchor member (12) comprises an anchor plate (16) and said recess (28) tapers outwardly from a mouth region to a retaining region and said outwardly tapering recess (28) is formed prior to insertion of the securement member (10).

2. A securement member (10) according to claim 1 in which the securement member (10) comprises retaining means (23) to retain the'actuating member (14) to the anchor member (12) prior to use.

3. A securement member (10) according to claim 1 or claim 2 in which the actuating member (14) comprises an upper abutment surface (30) and the actuating member (14) is arranged, in use, to move from the first position to the second position as a result of the upper abutment surface (30) abutting a further surface (32) .

4. A securement member (10) according to any preceding claim in which the anchor plate (16) is arranged, in use, to locate at least partially underneath a building member (18).

5. A securement member (10) according to any preceding claim in which the anchor member (12) comprises an elongate portion (20) which is arranged, in use, to extend through a passageway defined in a building member (18).

6. A securement member (10) according to any preceding claim in which the actuating member (14) comprises side plates (29) to prevent the actuating member- (14) from being transversely removed from the first and second arms (22,24).

7. An assembly comprising a securement member (10) and an article (26) having a recess (28) defined therein, the securement member (10) comprising an anchor member (12) and an actuating member (14), the anchor member (12) comprising a first arm (22) and a second arm (24), the actuating member (14) is arranged to locate between the first arm (22) and the second arm (24), the actuating member (14) is movable relative to the anchor member (12) between a first position and a second position wherein the first arm (22) and the second arm (24) are spaced further apart when the actuating member (14) is in the second position relative to the first position, in which, in the second position, the first arm (22), second arm (24) and actuating member (14) are arranged to be located at least partially in the recess (28) **characterised in that** the anchor member (12) comprises an anchor plate (16) and said recess (28) is tapered outwardly from a mouth region to a retaining region and wherein the outwardly tapering recess (28) is formed in the article (26) prior to insertion of the securement member (10).

8. An assembly according to claim 7 in which the recess (28) is an elongate recess extending longitudinally along the article (26).

9. An assembly according to claim 7 or claim 8 in which the recess (28) is formed in the article (26) using an extrusion method.

10. A method of securing an article (26) to a surface comprising securing an anchor member (12) of a securement member (10) to the surface and engaging at least apart of the securement member (10) with the article (26), the method further comprising locating an actuating member (14) between a first arm (22) and a second arm (24) of the anchor member, and moving the actuating member (14) between a first position and a second position relative to the anchor member (12) whereby the first arm (22) and the second arm (24) are spaced further apart when the actuating member (14) is in the second position relative to the first position the method further comprising providing a recess (28) for at least partially locating the first arm (22), second arm (24) and actuating member (14) therein, **characterised in that** the anchor member (12) comprising an anchor plate (16) and the recess (28) tapers outwardly from a mouth region to a retaining region and wherein the outwardly tapering recess (28) is formed prior to insertion of the securement member (10).

11. A method according to claim 10 in which the method comprises lowering the article (26) in order to locate at least a part of the first arm (22), second arm (24) and actuating member (14) in a recess (28) defined in the article (26).

## Patentansprüche

1. Befestigungselement (10), das in eine kegelförmige Aussparung eingeführt wird und ein Ankerelement (12) und ein Betätigungselement (14) umfasst, wobei das Ankerelement (12) einen ersten Arm (22) und einen zweiten Arm (24) umfasst und das Betätigungselement (14) so angeordnet ist, dass es zwischen dem ersten Arm (22) und dem zweiten Arm (24) positioniert ist und relativ zu dem Ankerelement (12) zwischen wenigstens einer ersten Position und einer zweiten Position bewegt werden kann, bei denen der erste Arm (22) und der zweite Arm (24) mit größerem Abstand angeordnet werden, wenn sich das Betätigungselement (14) in der zweiten Position relativ zu der ersten Position befindet, und bei denen der erste Arm (22), der zweite Arm (24) und das Betätigungselement (14) in der zweiten Position so angeordnet sind, dass sie wenigstens teilweise in einer Aussparung (28) positioniert werden, **dadurch gekennzeichnet, dass** das Ankerelement (12) eine Ankerplatte (16) umfasst und sich die Aussparung (28) von einem Öffnungsbereich zu einem Haltebereich kegelförmig nach außen zuspitzt und die sich nach außen kegelförmig zuspitzende Aussparung (28) vor dem Einführen des Befestigungselements (10) ausgebildet wird.

2. Befestigungselement (10) nach Anspruch 1, wobei das Befestigungselement (10) Halteeinrichtungen (23) umfasst, um das Betätigungselement (14) vor dem Gebrauch an dem Ankerelement (12) zu halten.

3. Befestigungselement (10) nach Anspruch 1 oder Anspruch 2, wobei das Betätigungselement (14) eine obere Widerlagerfläche (30) umfasst und das Betätigungselement (14), bei Gebrauch, so angeordnet ist, dass es sich als Folge davon, dass die obere Widerlagerfläche (30) gegen eine weitere Fläche (32) anstößt, von der ersten Position zu der zweiten Position bewegt.

4. Befestigungselement (10) nach einem vorhergehenden Anspruch, wobei die Ankerplatte (16), bei Gebrauch, so angeordnet ist, dass sie wenigstens teilweise unter einem Bauelement (18) positioniert wird.

5. Befestigungselement (10) nach einem vorhergehenden Anspruch, wobei das Ankerelement (12) einen verlängerten Abschnitt (20) umfasst, der, bei Gebrauch, so angeordnet ist, dass er sich durch einen Durchgang, der in einem Bauelement (18) definiert ist, hindurch erstreckt.

6. Befestigungselement (10) nach einem vorhergehenden Anspruch, wobei das Betätigungselement (14) Seitenplatten (29) umfasst, um zu verhindern, dass das Betätigungselement (14) von dem ersten und zweiten Arm (22, 24) quer entfernt wird.

7. Baueinheit, die ein Befestigungselement (10) und einen Artikel (26) mit einer darin definierten Aussparung (28) umfasst, wobei das Befestigungselement (10) ein Ankerelement (12) und ein Betätigungselement (14) umfasst, das Ankerelement (12) einen ersten Arm (22) und einen zweiten Arm (24) umfasst und das Betätigungselement (14) so angeordnet ist, dass es sich zwischen dem ersten Arm (22) und dem zweiten Arm (24) positioniert, wobei das Betätigungselement (14) relativ zu dem Ankerelement (12) zwischen einer ersten Position und einer zweiten Position bewegt werden kann, wobei der erste Arm (22) und der zweite Arm (24) mit größerem Abstand angeordnet werden, wenn sich das Betätigungselement (14) in der zweiten Position relativ zu der ersten Position befindet, wobei der erste Arm (22), der zweite Arm (24) und das Betätigungselement (14) in der zweiten Position so angeordnet sind, dass sie wenigstens teilweise in der Aussparung (28) positioniert werden, **dadurch gekennzeichnet, dass** das Ankerelement (12) eine Ankerplatte (16) umfasst und sich die Aussparung (28) von einem Öffnungsbereich zu einem Haltebereich kegelförmig nach außen zuspitzt und die sich nach außen kegelförmig zuspitzende Aussparung (28) vor dem Einführen des Befestigungselements (10) in dem Artikel (26) ausgebildet wird.

8. Baueinheit nach Anspruch 7, wobei die Aussparung (28) eine verlängerte Aussparung ist, die sich längs entlang des Artikels (26) erstreckt.

9. Baueinheit nach Anspruch 7 oder Anspruch 8, wobei die Aussparung (28) unter Verwendung eines Extrusionsverfahrens in dem Artikel (26) ausgebildet wird.

10. Verfahren zum Befestigen eines Artikels (26) an einer Fläche, das das Befestigen eines Ankerelements (12) eines Befestigungselements (10) an der Fläche und das Ineingriffbringen von wenigstens einem Teil des Befestigungselements (10) mit dem Artikel (26) umfasst, wobei das Verfahren des Weiteren das Positionieren eines Betätigungselements (14) zwischen einem ersten Arm (22) und einem zweiten Arm (24) des Ankerelements und das Bewegen des Betätigungselements (14) zwischen einer ersten Position und einer zweiten Position relativ zu dem Ankerelement (12) umfasst, wobei der erste Arm (22) und der zweite Arm (24) mit größerem Abstand angeordnet werden, wenn sich das Betätigungselement (14) in der zweiten Position relativ zu der ersten Position befindet, und das Verfahren des Weiteren das Bereitstellen einer Aussparung (28) umfasst, um den ersten Arm (22), den zweiten Arm (24) und das Betätigungselement (14) wenigstens teilweise darin zu positionieren, **dadurch gekennzeichnet, dass** das Ankerelement (12) eine Ankerplatte (16) umfasst und sich die Aussparung (28) von einem Öffnungsbereich zu einem Haltebereich kegelförmig nach außen zuspitzt und die sich nach außen kegelförmig zuspitzende Aussparung (28) vor dem Einführen des Befestigungselements (10) ausgebildet wird.

11. Verfahren nach Anspruch 10, wobei das Verfahren das Absenken des Artikels (26) umfasst, um wenigstens einen Teil des ersten Arms (22), des zweiten Arms (24) und des Betätigungselements (14) in einer in dem Artikel (26) definierten Aussparung (28) zu positionieren.

## Revendications

1. Elément de fixation (10) inséré dans un évidement conique comprenant un élément d'ancrage (12) et un élément d'actionnement (14), l'élément d' ancrage (12) comprenant un premier bras (22) et un deuxième bras (24), l'élément d'actionnement (14) est adapté pour se positionner entre le premier bras (22) et le deuxième bras (24) et pour être mobile par rapport à l'élément d'ancrage (12) entre au moins une première position et une deuxième position dans lequel le premier bras (22) et le deuxième bras (24) sont davantage écartés lorsque l'élément d'actionnement (14) est dans la deuxième position par rapport à la première position, dans lequel dans la deuxième position, le premier bras (22), le deuxième bras (24) et l'élément d'actionnement (14) sont adaptés pour être positionnés au moins partiellement dans un évidement (28) **caractérisé en ce que** l'élément d'ancrage (12) comprend une plaque d'ancrage (16) et ledit évidement (28) se rétrécit vers l'extérieur d'une région d'ouverture à une région de retenue et ledit évidement se rétrécissant vers l'extérieur (28) est formé avant l'insertion de l'élément de fixation (10).

2. Elément de fixation (10) selon la revendication 1, dans lequel l'élément de fixation (10) comprend un moyen de retenue (23) servant à retenir l'élément d'actionnement (14) sur l'élément d'ancrage (12) avant utilisation.

3. Elément de fixation (10) selon la revendication 1 ou 2, dans lequel l'élément d'actionnement (14) comprend une surface d'appui supérieure (30) et l'élément d'actionnement (14) est adapté pour, en utilisation, se déplacer de la première position à la deuxième position suite à la mise en appui de la surface d'appui supérieure (30) sur une surface supplémentaire (32).

4. Elément de fixation (10) selon l'une quelconque des revendication précédentes, dans lequel la plaque d'ancrage (16) est adaptée pour, en utilisation, se positionner au moins partiellement sous un élément de construction (18).

5. Elément de fixation (10) selon l'une quelconque des revendication précédentes, dans lequel l'élément d'ancrage (12) comprend une partie allongée (20) qui est adaptée pour, en utilisation, s'étendre dans un passage défini dans un élément de construction (18).

6. Elément de fixation (10) selon l'une quelconque des revendication précédentes, dans lequel l'élément d'actionnement (14) comprend des plaques latérales (29) pour empêcher l'élément d'actionnement (14) d'être retiré transversalement des premier et deuxième bras (22, 24).

7. Assemblage comprenant un élément de fixation (10) et un article (26) comportant un évidement (28) défini dedans, l'élément de fixation (10) comprenant un élément d'ancrage (12) et un élément d'actionnement (14), l'élément d'ancrage (12) comprenant un premier bras (22) et un deuxième bras (24), l'élément d'actionnement (14) est adapté pour se positionner entre le premier bras (22) et le deuxième bras (24), l'élément d'actionnement (14) est mobile par rapport à l'élément d'ancrage (12) entre une première position et une deuxième position dans lequel le premier bras (22) et le deuxième bras (24) sont davantage écartés lorsque l'élément d'actionnement (14) est dans la deuxième position par rapport à la première position, dans lequel dans la deuxième position, le premier bras (22), le deuxième bras (24) et l'élément d'actionnement (14) sont adaptés pour être positionnés au moins partiellement dans l'évidement (28) **caractérisé en ce que** l'élément d'ancrage (12) comprend une plaque d'ancrage (16) et ledit évidement (28) se rétrécit vers l'extérieur d'une région d'ouverture à une région de retenue et dans lequel l'évidement se rétrécissant vers l'extérieur (28) est formé dans l'article (26) avant l'insertion de l'élément de fixation (10).

8. Assemblage selon la revendication 7, dans lequel l'évidement (28) est un évidement allongé s'étendant longitudinalement le long de l'article (26).

9. Assemblage selon la revendication 7 ou 8, dans lequel l'évidement (28) est formé dans l'article (26) en utilisant un procédé d'extrusion.

10. Procédé de fixation d'un article (26) sur une surface comprenant le fait de fixer un élément d'ancrage (12) d'un élément de fixation (10) sur la surface et de mettre en prise au moins une partie de l'élément de fixation (10) avec l'article (26), le procédé comprenant en outre le fait de positionner un élément d'actionnement (14) entre un premier bras (22) et un deuxième bras (24) de l'élément d'ancrage, et de déplacer l'élément d'actionnement (14) entre une première position et une deuxième position par rapport à l'élément d'ancrage (12) grâce à quoi le premier bras (22) et le deuxième bras (24) sont davantage écartés lorsque l'élément d'actionnement (14) est dans la deuxième position par rapport à la première position le procédé comprenant en outre le fait de prévoir un évidement (28) pour y positionner au moins partiellement le premier bras (22), le deuxième bras (24) et l'élément d'actionnement (14), **caractérisé en ce que** l'élément d'ancrage (12) comprenant une plaque d'ancrage (16) et l'évidement (28) se rétrécit vers l'extérieur d'une région d'ouverture à une région de retenue et où l'évidement se rétrécissant vers l'extérieur (28) est formé avant l'insertion de l'élément de fixation (10).

11. Procédé selon la revendication 10, dans lequel le procédé comprend le fait d'abaisser l'article (26) afin de positionner au moins une partie du premier bras (22), du deuxième bras (24) et de l'élément d'actionnement (14) dans un évidement (28) défini dans l'article (26).
